# EUROPEAN PATENT APPLICATION

(11) **EP 3 716 221 A1**
(43) Date of publication of application: **30.09.2020**
(21) Application number: 20166323.4
(22) Date of filing: 27.03.2020
(51) Int. Cl.: G06T 19/20, G06T 15/10

(54) **ORTHOGRAPHIC PROJECTION PLANES FOR SCENE EDITORS**

(30) Priority: 28.03.2019 US 201916367655
(71) Applicant: Christie Digital Systems USA, Inc., Cypress, CA 90630 (US)
(72) Inventor: FARAGHER, Chad, Kitchener, Ontario N2H 4L5 (CA)
(74) Representative: Stöckeler, Ferdinand

(57) **Abstract**

An example non-transitory machine-readable storage medium includes instructions to generate an orthographic projection of an object in a scene. When executed, the instructions cause a processor of a computing device to render a scene viewable through an editing viewport, the scene containing a three-dimensional object. The instructions further cause the processor to render an orthographic projection of the three-dimensional object onto an orthographic projection plane, the orthographic projection being viewable through the editing viewport. The instructions further cause the processor to receive an input of a manipulation of the three-dimensional object and update the orthographic projection to reflect the input.

## Description

### FIELD

The present specification relates to computer graphics, and in particular to scene editors and tools therefor.

### BACKGROUND

Scene editors for editing models, characters, and other objects in a scene, and the like, typically provide a user interface including a viewport through which an object or group of objects may be viewed. The viewport is typically subdivided into quadrants containing different views of the scene, such as a perspective view, and several different orthographic views (e.g. a front elevation view, a side elevation view, and a top plan view).

A perspective view of the scene allows a user of the scene editor to attain an overall appreciation of the scene being edited. An orthographic view allows the user to precisely edit an object or group of objects with respect to the two dimensions shown in the orthographic view. The user typically switches focus between different views of the scene when performing editing tasks.

### SUMMARY

A scene editor includes a user interface that provides an editing viewport which displays an orthographic projection of an object in a scene on a plane inserted directly into a perspective or other view of the scene, thereby providing a user of the scene editor with the benefit of having a reference to an orthographic view of the object embedded directly within the perspective or other view. Such a plane is termed an orthographic projection plane. The orthographic projection may be synchronized to the object in the scene with respect to position, orientation, scale, motion, and other properties. Further, the user may manipulate the object by manipulating the object directly, manipulating the orthographic projection, or by manipulating a widget on the orthographic projection plane. Thus, the user may edit a scene with reference to both a perspective and an orthographic view of the objects in the scene through a single viewport.

Thus, according to an aspect of the specification, a non-transitory machine-readable storage medium includes instructions to render a scene viewable through an editing viewport, the scene containing a three-dimensional object. The instructions are further to render an orthographic projection of the three-dimensional object onto an orthographic projection plane, the orthographic projection viewable through the editing viewport. The instructions are further to receive an input of a manipulation of the three-dimensional object, update the orthographic projection to reflect the input. The instructions may be executed by a computing device and performed as a method by the computing device. The instructions may be incorporated as a tool into a scene editor program.

The instructions may further be to render a manipulatable object on the orthographic projection plane, wherein the input is received by interaction with the manipulatable object. The manipulatable object may include the orthographic projection. The manipulatable object may include a manipulator widget.

The instructions may further be to render the orthographic projection plane viewable through the editing viewport. The orthographic projection plane may be semitransparent. Further, the instructions may further be to render an assistive visual indicator on the orthographic projection plane.

The instructions may further be to render a second orthographic projection of the three-dimensional object onto a second orthographic projection plane, the second orthographic projection plane perpendicular to the orthographic projection plane and to update the second orthographic projection of the three-dimensional object to reflect the input.

The instructions may further be to render a second orthographic projection of the three-dimensional object onto a second orthographic projection plane, the second orthographic projection plane perpendicular to the orthographic projection plane, and to update the second orthographic projection of the three-dimensional object to reflect the input.

The instructions may further be to render the three-dimensional object in the editing viewport in a first visual style, and to render the orthographic projection of the three-dimensional object rendered on the orthographic projection plane in a second visual style, the second visual style different from the first visual style.

The instructions may further be to cause the editing viewport to display the scene in a perspective view. The instructions may further be to insert the orthographic projection plane into the scene as an object. An orthographic projection plane may be aligned with a coordinate axis of the scene.

According to another aspect of the specification, a non-transitory machine-readable storage medium includes instructions to render a scene viewable through an editing viewport, the scene containing a three-dimensional object. The instructions are further to generate a bounding box having inside walls viewable through the editing viewport, each inside wall comprising an orthographic projection plane of a plurality of orthographic projection planes bounding the three-dimensional object. The instructions are further to render an orthographic projection of the three-dimensional object onto each orthographic projection plane of the plurality of orthographic projection planes. The instructions are further to receive an input of a manipulation of the three-dimensional object, and update each of the orthographic projections to reflect the input. The bounding box may bound the scene. The instructions may be executed by a computing device and performed as a method by the computing device. The instructions may be incorporated as a tool into a scene editor program.

According to yet another aspect of the specification, a non-transitory machine-readable storage medium includes instructions to render a scene viewable through an editing viewport, the scene containing a three-dimensional object. The instructions are further to render an orthographic projection of the three-dimensional object onto an orthographic projection plane, the orthographic projection viewable through the editing viewport. The instructions are further to synchronize scale, position, and orientation of the orthographic projection with the scale, position, and orientation of the three-dimensional object as viewed through the editing viewport.

### BRIEF DESCRIPTION OF THE DRAWINGS

FIG. 1 is a schematic diagram of an example non-transitory machine-readable storage medium. The storage medium stores instructions to cause a processor of a computing device to execute tasks to generate an orthographic projection of an object in a scene viewable through an editing viewport.
FIG. 2 is a schematic diagram of an example computing device to provide an editing viewport through which an orthographic projection of an object in a scene is viewable.
FIG. 3 is a flowchart of an example method to generate an orthographic projection of an object in a scene viewable through an editing viewport.
FIG. 4 is a schematic diagram of another example computing device to provide an editing viewport through which an orthographic projection of an object in a scene is viewable.
FIG. 5 is a schematic diagram of the editing viewport of FIG. 4 displaying another example scene showing the object, the object being in motion.
FIG. 6 is a schematic diagram of the editing viewport of FIG. 4 displaying another example scene showing the object and an orthographic projection plane having visual indicators and manipulator widgets for interacting with the object.
FIG. 7 is a schematic diagram of the editing viewport of FIG. 4 displaying another example scene showing the object and the orthographic projection being of a different visual style.
FIG. 8 is a schematic diagram of the editing viewport of FIG. 4 displaying another example scene showing the object and two orthographic projections of the object displayed on two orthographic projection planes.
FIG. 9 is a schematic diagram of the editing viewport of FIG. 4 displaying another example scene showing orthographic projections of objects in the scene displayed on inside walls of a bounding box surrounding the scene.
FIG. 10 is a flowchart of an example method to generate an orthographic projection of an object in a scene viewable through an editing viewport on an inside wall of a bounding box.

### DETAILED DESCRIPTION

A scene editor typically includes a user interface which provides several different views of a scene. A user of the scene editor typically switches focus between the different views to accomplish a given editing task. For example, the user may arrange objects in the scene in an approximate fashion with reference to a perspective view, precisely arrange the objects with reference to one orthographic view, and scale the objects with reference to another orthographic view. Although the perspective view typically allows the user to attain an overall appreciation of the scene, the user typically refers to orthographic views to make more precise edits.

Switching focus between different views to perform a given editing task may be cognitively taxing on the user. The different views generally provide little sense of connectivity between one another and therefore may be confusing or burdensome to switch between. For example, it may be challenging to maintain the overall appreciation of the scene offered by the perspective view while making edits in orthographic views.

Further, the need to simultaneously display several separate views of the scene in the user interface may limit the amount of user interface space for devoted to any one view, and may limit the space that could otherwise be devoted to other user interface elements. The user may be forced to make a trade-off between, one the one hand, shrinking the size of one or more of the views of the scene to make room for other desirable user interface elements, and on the other hand, excluding other desirable user interface elements from the user interface to make room for the several separate views.

Moreover, a user interface which simultaneously displays several different views of the scene may consume more processing power and memory than a user interface which displays fewer views of the scene.

A scene editor may be provided with a user interface that includes an editing viewport which displays an orthographic projection of an object in a scene on a plane inserted directly into a perspective view of the scene, thereby providing the user with the benefit of having a reference to an orthographic view of the object embedded directly within the perspective view or other view. Such a plane is termed an orthographic projection plane. The orthographic projection may be synchronized to the object in the scene with respect to position, orientation, scale, motion, and other properties. A user may thereby view the orthographic projection of the object directly through the perspective view to attain both an overall appreciation of the scene provided by the perspective view and the precision provided by an orthographic view simultaneously.

Further, the user may manipulate the orthographic projection by manipulation of the orthographic projection or by the manipulation of a widget on an orthographic projection plane inserted into the scene, with the manipulation being reflected in the actual object in the scene. Alternatively, the user may manipulate the actual object directly, with the manipulation reflected in the orthographic projection. Thus, the user may manipulate objects in a scene with reference to both a perspective and an orthographic view through a single viewport.

Further, several different orthographic projections of the object may be provided. For example, one, two, three, or more orthographic projection planes may be inserted into the scene, each having a different orthographic projection of the object projected thereon from a different direction. For example, two orthographic projection planes may provide both front and side orthographic projections of the object. Moreover, several orthographic projection planes may form a bounding box around the object or scene, with orthographic projections being provided on each of the inner side walls of the bounding box, thereby providing one or more orthographic references of the object when viewed from any direction.

Such a scene editor may be less cognitively taxing on a user, and more intuitive and easy to use. Further, such a scene editor may afford more space to be provided for a larger viewport or for additional user interface elements. Moreover, such a scene editor may require less processing power and memory, thereby freeing processing power and memory for other tasks.

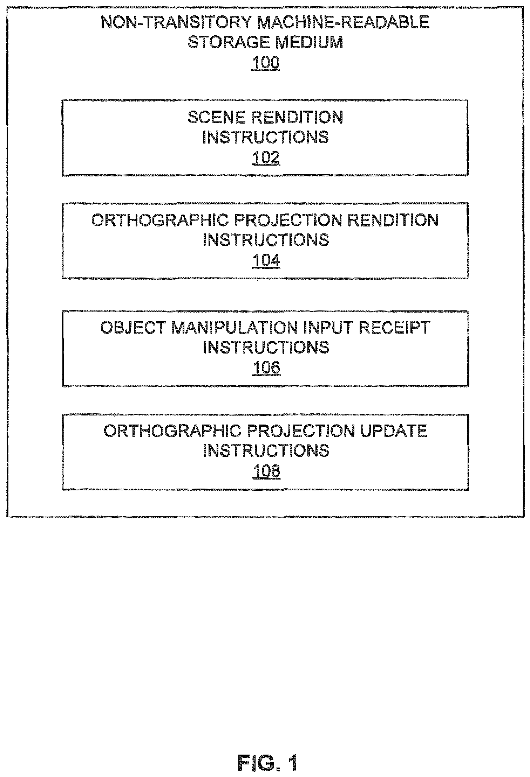

FIG. 1 is a schematic diagram of an example non-transitory machine-readable storage medium 100 which stores instructions to cause a processor of a computing device to execute tasks to generate an orthographic projection of an object in a scene viewable through an editing viewport.

The computing device may include a notebook computer, desktop computer, smartphone, server, or any computing device or combination of computing devices having access to the storage medium 100. The instructions stored on the storage medium 100 may be performed as a method by such a computing device.

The storage medium 100 includes scene rendition instructions 102 to render a scene viewable through the editing viewport. The scene contains a three-dimensional object for which an orthographic projection is to be generated. The scene may include a single object, such as in an example where the scene editor is part of a model editor in which a single model is to be edited. The scene may include a plurality of objects for which orthographic projections are to be generated, such as in an example where the scene editor is part of a game editor in which a plurality of objects is placed and edited.

The editing viewport may display the scene in a perspective view, an isometric view, or a similar view which displays three spatial dimensions of the scene. Thus, the scene rendition instructions 102 may cause the processor to cause the editing viewport to display the scene in a perspective view.

The storage medium 100 further includes orthographic projection rendition instructions 104 to render an orthographic projection of the three-dimensional object. The orthographic projection is viewable through the editing viewport. The orthographic projection of the three-dimensional object may be rendered onto an orthographic projection plane.

In some examples, the orthographic projection plane itself may be viewable through the editing viewport. In other words, the orthographic projection plane may be opaque or semitransparent. Thus, the orthographic projection rendition instructions 104 may cause the processor to render the orthographic projection plane viewable through the editing viewport. In some examples, the orthographic projection rendition instructions 104 may cause the processor to render the orthographic projection plane as opaque or semitransparent. In other examples, the orthographic projection plane may not be viewable through the editing viewport. In other words, the orthographic projection plane may be transparent.

Further, in some examples, the orthographic projection plane may be an actual object inserted into the scene. Thus, the orthographic projection rendition instructions 104 may cause the processor to insert the orthographic projection plane into the scene as an object. In other examples, the orthographic projection plane or may not be an actual object inserted into the scene, but rather a graphical overlay generated in the editing viewport.

The storage medium 100 further includes object manipulation input receipt instructions 106 to receive an input of a manipulation of the three-dimensional object. Further, the storage medium 100 includes orthographic projection update instructions 108 to update the orthographic projection to reflect the input. Manipulation of three-dimensional object may be received as an interaction with the orthographic projection of the object, or by the manipulation of a widget on an orthographic projection plane inserted into the scene, in which case with the manipulation is reflected in the view of the object in the scene. Manipulation of three-dimensional object may be received as an interaction with the view of the object in the scene, in which chase the manipulation is reflected in the orthographic projection of the object. Thus, the object manipulation input receipt instructions 106 may cause the processor to render a manipulable object on the orthographic projection plane, where the input is received by interaction with the manipulatable object, wherein the manipulatable object may be the orthographic projection or a manipulator widget. Thus, the orthographic projection is synchronized to the view of the object in the scene, and the view of the object in the scene is synchronized to the orthographic projection.

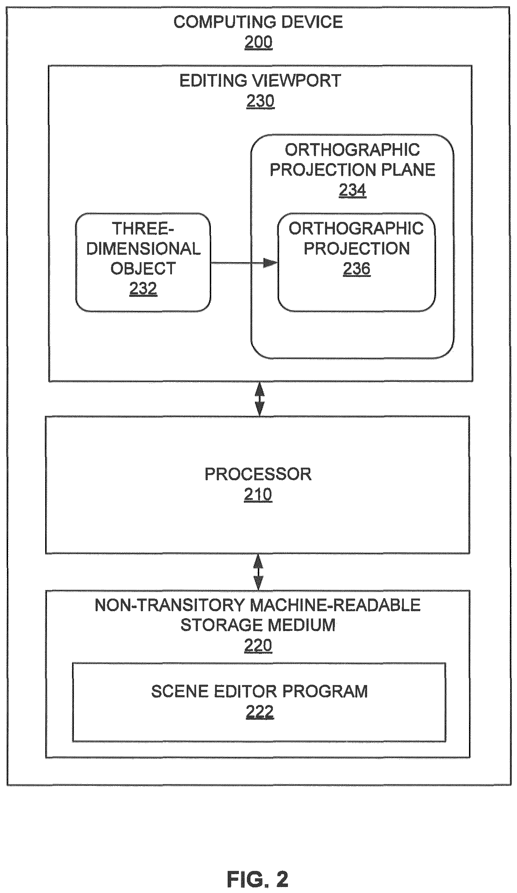

FIG. 2 is a schematic diagram of an example computing device 200. The computing device 200 includes a processor 210 and non-transitory machine-readable storage medium 220. The computing device 200 provides a scene editor to edit a scene with a user interface including an editing viewport 230. The editing viewport 230 displays the scene, which contains a three-dimensional object 232. The editing viewport 230 further displays an orthographic projection 236 of the three-dimensional object 232 directly within the scene. The editing viewport 230 may also display an orthographic projection plane 234 on which the three-dimensional object 232 is projected as orthographic projection 236.

The storage medium 220 stores scene editor program 222, executable by the processor 210, to render a scene through the editing viewport 230 and to enable a user to edit the scene. The scene editor program 222 includes machine-readable instructions similar to the instructions stored on the storage medium 100 of FIG. 1, and thus may include scene rendition instructions, orthographic projection rendition instructions, object manipulation receipt instructions, and orthographic projection update instructions. For example, the scene editor program 222 includes instructions to render an orthographic projection 236 of the three-dimensional object 232, as discussed above with reference to FIG. 1. For further description of the above elements, description of the storage medium 100 of FIG. 1 may be referenced.

The computing device 200 may include a notebook computer, desktop computer, smartphone, or any computing device or combination of computing devices having input, processing, and display capability. In some examples, the computing device 200 may include a display device to display the editing viewport 230, and an input device, such as a keyboard, mouse, and/or touch screen, to receive inputs to manipulate an object through the editing viewport 230, such as in an example where the computing device 200 is configured to run a scene editor application stored locally at the computing device 200. In other examples, the computing device 200 may be a server hosting a scene editor program which receives input from, and displays the editing viewport 230 to, a remote computing device having an input device and display device, such as in an example where the computing device 200 is a web server hosting a scene editor program accessible through a browser executable by a remote computing device. Further, although a single processor 210 is shown, it is to be understood that the term processor refers to any quantity and combination of a processor, a central processing unit (CPU), graphics processing unit (GPU), a microprocessor, a microcontroller, a field-programmable gate array (FPGA), and similar. Further, although a single storage medium 220 is shown, it is to be understood that the term storage medium refers to any quantity and combination of volatile and non-volatile storage media, such as random-access memory (RAM), a hard drive, flash memory, and similar.

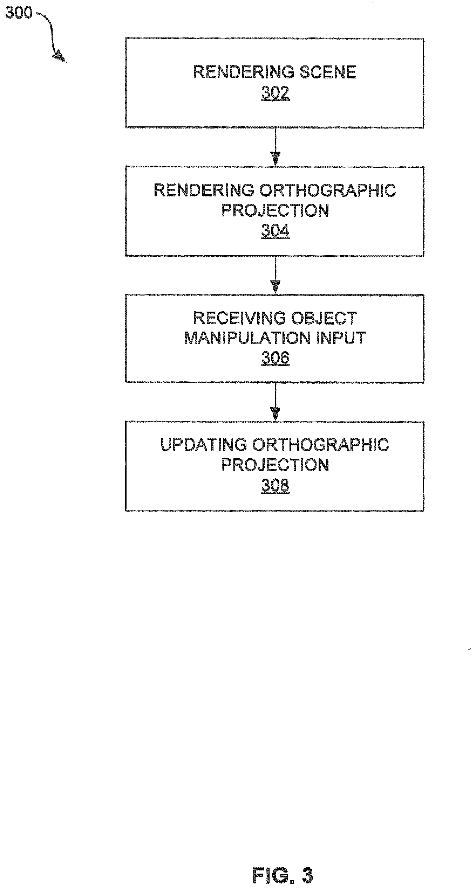

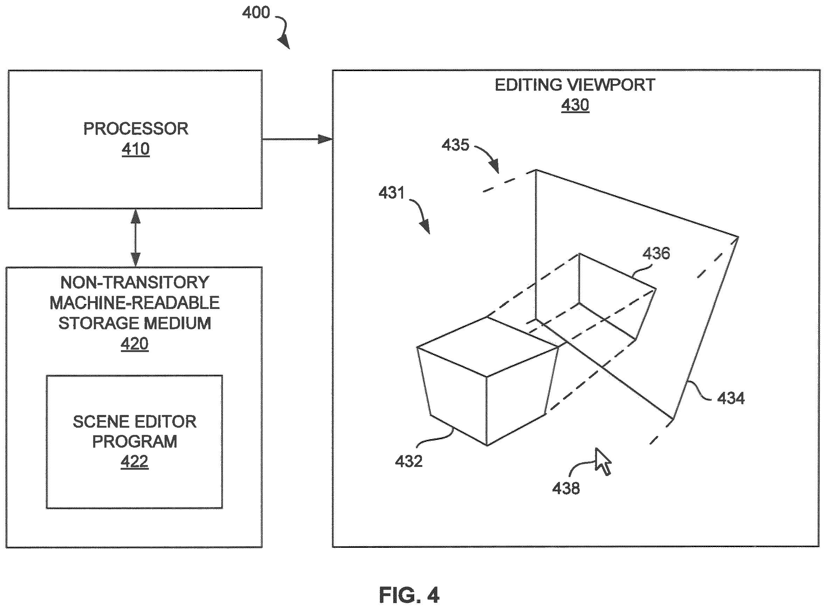

FIG. 3 is a flowchart of an example method 300 to generate an orthographic projection of an object in a scene viewable through an editing viewport. The method 300 may be performed using any instructions or computing device as described herein, such as the instructions stored on storage medium 100 of FIG. 1, and the computing device 200 of FIG. 2 or the computing device 400 of FIG. 4. The method 300 may be performed using other instructions and/or devices. The method 300 may be embodied in a non-transitory machine-readable storage medium.

At block 302, a scene is rendered to be viewable through an editing viewport, the scene containing a three-dimensional object. At block 304, an orthographic projection of the three-dimensional object is rendered. The orthographic projection is viewable through the editing viewport. The orthographic projection may be rendered onto an orthographic projection plane. At block 306, an input of a manipulation of the three-dimensional object is received. At block 308, an update to the orthographic projection is made to reflect the input. Thus, in other words, the orthographic projection is synchronized with the three-dimensional object. The orthographic projection may be synchronized in scale, position, and orientation with the three-dimensional object.

The blocks of the method 300 are similar to the instructions stored on the storage medium 100 of FIG. 1, including scene rendition instructions 102, orthographic projection rendition instructions 104, object manipulation input receipt instructions 106, and orthographic projection update instructions. Thus, for further description of the blocks of method 300, reference may be had to the instructions of the storage medium 100 of FIG. 1. For example, manipulation of three-dimensional object may be received as an interaction with the three-dimensional object in the scene, the orthographic projection of the object, or a manipulation widget, as discussed above with reference to FIG. 1.

FIG. 4 is a schematic diagram of another example computing device 400. The computing device 400 is similar to the computing device 200 of FIG. 2, with like elements numbered in a "400" series rather than a "200" series, and thus, includes a processor 410, non-transitory machine-readable storage medium 420 containing a scene editor program 422 to provide an editable scene 431 via a user interface including an editing viewport 430. For further description of the above elements, description of the computing device 200 of FIG. 2 may be referenced.

The editing viewport 430 displays the scene 431, which contains a three-dimensional object 432. The editing viewport 430 further displays an orthographic projection 436 of the three-dimensional object 432 directly within the scene 431. The editing viewport 430 also displays an orthographic projection plane 434 onto which the three-dimensional object 432 is projected as orthographic projection 436. While in some examples, the orthographic projection plane 434 may be an infinite plane, the orthographic projection plane 434 is generally a finite section of a plane which is laterally bounded by a two-dimensional shape, such as, in the example shown, a square. The lateral bounds of the orthographic projection plane 434 may be any other shape, be it rectangular, triangular, or otherwise polygonal, circular, elliptical, or otherwise curvilinear, or a combination of such, or similar.

The three-dimensional object 432 may be projected onto a region of the orthographic projection plane 434 corresponding to the orthographic projection of a cross-sectional profile of the three-dimensional object 432 orthogonal to the orthographic projection plane onto the orthographic projection plane 434. The orthographic projection 436 may match the scale of the three-dimensional object 432 in the scene 431. For example, if a cross-sectional profile of the three-dimensional object 432 that is orthogonal to the orthographic projection plane 434 has an area of ten units squared in the scene 431, then the orthographic projection 436 may have an area of ten units squared on the orthographic projection plane 434.

Any object in the scene 431 which is positioned on the side of the orthographic projection plane 434 visible to the user and within the lateral bounds of the orthographic projection plane 434 may be projected onto the orthographic projection plane 434. In other words, the orthographic projection plane 434 is associated with an orthographic projection space 435 which is defined, at one end, by the orthographic projection plane 434, and extends perpendicular from the orthographic projection plane 434 by an arbitrary distance, at the other end, And is laterally bound by the same two-dimensional shape as the bounds of the orthographic projection plane 434. In the present example, the orthographic projection plane 434 is rectangular in shape, and thus the orthographic projection space 435 is a rectangular prism extending away from the orthographic projection plane 434. Any object within the orthographic projection space 435 may be orthographically projected onto the orthographic projection plane 434. The arbitrary distance by which the orthographic projection space 435 is extended may be selected so that more, or fewer, objects are projected onto the orthographic projection plane 434. In the present example, the three-dimensional object 432 is a cube, but it is to be understood that the three-dimensional object 432 may be of any shape, size, or other configuration, such as a character model, environmental model, or model of another object. Further, it is to be understood that the scene 431 may contain a plurality of three-dimensional objects 432.

The editing viewport 430 displays the scene 431 in a perspective view. However, in other examples, other views which display three spatial dimensions of the scene 431, such as an isometric view, may be displayed. The editing viewport 430 displays the orthographic projection 436 directly within the perspective, or other, view of the three-dimensional object 432, and thereby provides the user of the scene editor with the benefit of having a reference to an orthographic view of the three-dimensional object 432 embedded directly within a non-orthographic view.

In some examples, the orthographic projection plane 434 may be aligned with a coordinate axis of the scene 431. For example, the orthographic projection plane 434 may be perpendicular to either the X, Z, or Y coordinate axis, and thus may be parallel with the Z-Y, X-Y, or X-Z coordinate plane of the scene 431. Aligning the orthographic projection plane 434 with one of the coordinate axes of the scene 431 may provide additional orientation information to a user who is interested in designing the scene 431 in relationship to a coordinate axis of the scene 431. In other examples, the orthographic projection plane 434 may be in any orientation with respect to the coordinate axes of the scene 431. Aligning the orthographic projection plane 434 in any other orientation, potentially unrelated to any coordinate axis of the scene 431, may enable greater flexibility for the user to design the scene 431 without reference to any coordinate axis, while maintaining a relationship between scale, position, and/or orientation between the objects in the scene 431 without being tied to any coordinate axis of the scene 431.

A user may interact with the three-dimensional object 432 and orthographic projection 436 via the editing viewport 430. For example, a user may interact using a cursor 438 to select objects, drag buttons, interact with widgets, and the like. It is contemplated that other user interface elements such as touch screens may be used.

The user may manipulate the position, scale, orientation, or other property of the three-dimensional object 432. In some examples, the user may interact with the three-dimensional object 432 by interacting with the three-dimensional object 432 in the scene 431, in which case the manipulation is reflected in the orthographic projection 436, or by interacting with the orthographic projection 436, in which case the manipulation is reflected in the three-dimensional object 432 in the scene 431. The user may interact with the three-dimensional object 432 by another tool in the scene editor, such as a side menu to adjust the position, scale, and/or orientation of the three-dimensional object 432, in which case the manipulation is reflected in both the three-dimensional object 432 in the scene 431 and in the orthographic projection 436. The orthographic projection 436 is thus synchronized to the three-dimensional object 432 in scale, position, and orientation.

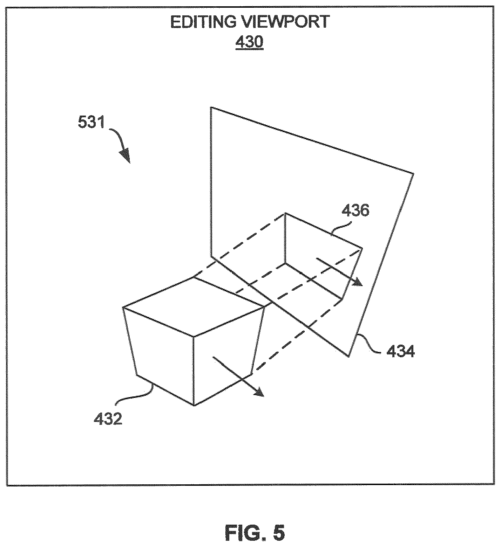

FIG. 5 shows the editing viewport 430 showing a scene 531 in which the three-dimensional object 432 is in motion. The orthographic projection space 435 is omitted for clarity. The position of the orthographic projection 436 on the orthographic projection plane 434 is synchronized to the position of the three-dimensional object 432 in the scene 531. Thus, as the three-dimensional object 432 moves, the orthographic projection 436 moves in synchronized relation.

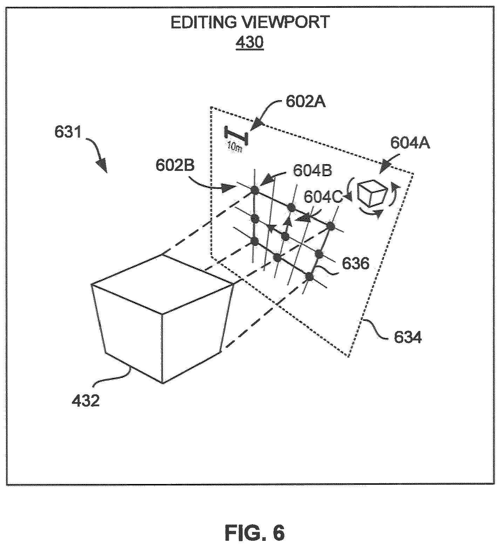

FIG. 6 shows the editing viewport 430 showing a scene 631 in which the three-dimensional object 432 is projected onto an orthographic projection plane 634 as orthographic projection 636. The orthographic projection space is omitted for clarity. The orthographic projection plane 634 includes tools to assist a user to manipulate the three-dimensional object 432.

The orthographic projection plane 634 includes assistive visual indicators 602A, 602B, rendered on the orthographic projection plane 634. In the present example, a first assistive visual indicator 602A includes a ruler to provide information related to the scale of the objects projected onto the orthographic projection plane 634. A user may thereby scale the three-dimensional object 432 in the dimensions of the orthographic projection plane 634 with reference to the ruler. A second assistive visual indicator 602B includes one or more grid lines to provide position and orientation information related to the objects projected on the orthographic projection plane 634. A user may thereby arrange the three-dimensional object 432 in the scene 631 with reference to one or more grid lines. Although the grid lines 602 are shown covering only a portion of the orthographic projection plane 634, it is to be understood that in some examples the grid lines 602 may cover the entire orthographic projection plane 634.

The orthographic projection plane 634 further includes manipulator widgets 604A, 604B to transform, translate, rotate, scale, or otherwise manipulate the three-dimensional object 432. A first manipulator widget 604A may be interacted with to adjust an orientation of the three-dimensional object 432. A second manipulator widget 604B may be interacted with to adjust a scale of the three-dimensional object 432. A third manipulator widget 604C may be interacted with to slide the three-dimensional object 432 along a coordinate axis. Further, the orthographic projection 636 itself may be interacted with, such as through dragging and dropping to position the orthographic projection 636 on the orthographic projection plane 634.

The orthographic projection plane 634 may be rendered as either opaque, transparent, or semitransparent. Further, any of the assistive visual indicators 602A, 602B and manipulator widgets 604A, 604B may be rendered as either opaque, transparent, or semitransparent. Rendering the orthographic projection plane 634 transparent or semitransparent may allow the user to view other objects in the scene which are not within the orthographic projection space of the orthographic projection plane 634. Alternatively, rendering the orthographic projection plane 634 opaque may allow the user to focus on the objects being manipulated within the orthographic projection space of the orthographic projection plane 634.

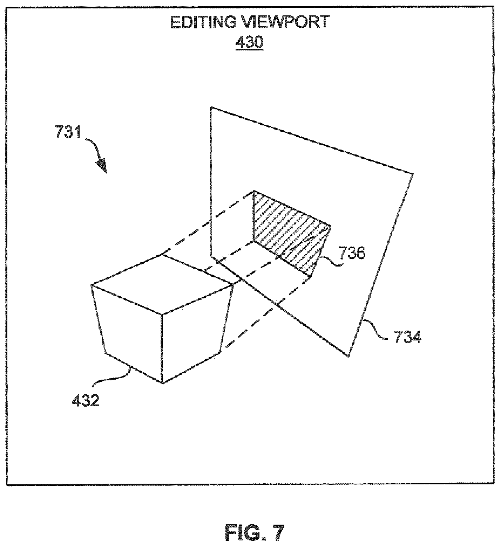

FIG. 7 shows the editing viewport 430 showing a scene 731 in which the three-dimensional object 432 is projected onto an orthographic projection plane 734. The orthographic projection space is omitted for clarity. The orthographic projection plane 734 displays an orthographic projection 736 of the three-dimensional object 432 that is of a different visual style than the three-dimensional object 432. Thus, the three-dimensional object 432 may be rendered in a first visual style, and the orthographic projection 736 may be rendered in a second visual style, the second visual style different from the first visual style.

For example, the three-dimensional object 432 may be rendered solid, whereas the orthographic projection 736 may be rendered as a wireframe of the three-dimensional object. As another example, the three-dimensional object 432 may be rendered in full color, whereas the orthographic projection 736 may be rendered in greyscale. The orthographic projection 736 being in a different visual style than the three-dimensional object 432 may provide an intuitive visual cue to the user that the orthographic projection 736 is a reference or editing tool. Further, the different visual style of the orthographic projection 736 may accentuate particular physical characteristics of the three-dimensional object 432 that are relevant for editing purposes. For example, it may be easier to precisely align objects when using wireframe orthographic projections of the objects than when using full color orthographic projections of the objects.

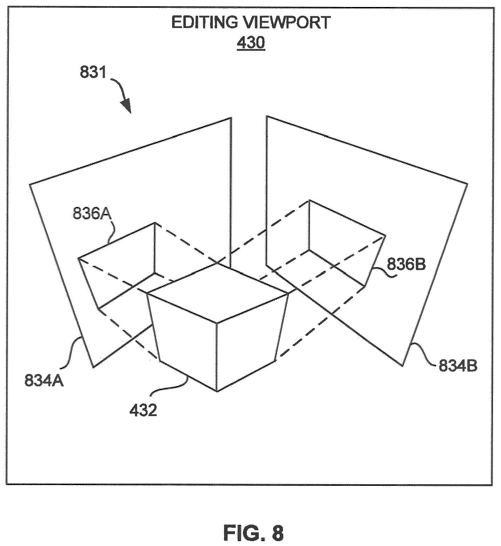

FIG. 8 shows the editing viewport 430 showing a scene 831 in which the three-dimensional object 432 is projected onto a first orthographic projection plane 834A as a first orthographic projection 836A and a second orthographic projection plane 834B as a second orthographic projection 836B. The first orthographic projection 836A and second orthographic projection 836B are both synchronized to the three-dimensional object 432. Thus, as the three-dimensional object 432 is manipulated, the first orthographic projection 836A and second orthographic projection 836B are updated simultaneously.

Each orthographic projection plane 834A, 834B, has its own orthographic projection space, which are omitted for clarity. The orthographic projection spaces may completely overlap, partially overlap, or not overlap. In the present example, the orthographic projection spaces at least partly overlap so that the three-dimensional object 432 is projected onto both the first orthographic projection plane 834A and the second orthographic projection plane 834B.

The first orthographic projection plane 834A may be perpendicular to the second orthographic projection plane 834B. Alternatively, the first orthographic projection plane 834A may not be perpendicular to the second orthographic projection plane 834B. Further, the orthographic projection planes 834A, 834B may align with a coordinate axis of the scene 831. For example, the first orthographic projection plane 834A may be perpendicular to the X coordinate axis and the second orthographic projection plane 834B may be perpendicular to the Y coordinate axis. Alternatively, one or more of the orthographic projection planes 834A, 834B may not be aligned with any of the coordinate axis of the scene 831.

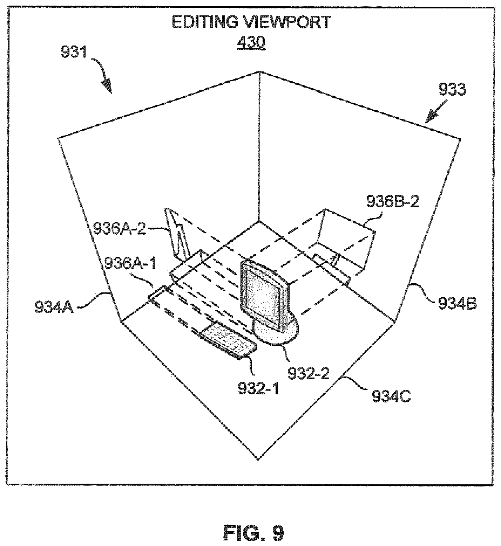

FIG. 9 shows the editing viewport 430 showing a scene 931 containing a plurality of three-dimensional objects 932 and a bounding box 933 of orthographic projection planes 934 (i.e. orthographic projection planes 934A, 934B, 934C) onto which orthographic projections 936 of the three-dimensional objects 932 are projected.

The scene 931 includes at least a first orthographic projection plane 934A, a second orthographic projection plane 934B, and a third orthographic projection plane 934C, each perpendicular to one another and intersecting to form a corner of the bounding box 933. The editing viewport 430 may display only the inside walls of the bounding box 933, and thus the bounding box 933 may include additional orthographic projection planes 934 to form a complete box not viewable from the perspective shown. Thus, first orthographic projection plane 934A, a second orthographic projection plane 934B, and a third orthographic projection plane 934C are three inside walls of the bounding box 933.

In some examples, the bounding box 933 may bound the scene 931. In other examples, portions of the scene 931 may lie outside of the bounding box 933. In such examples, portions of the scene 931 may be obscured from view where the orthographic projection planes 934 are opaque, or may be visible where the orthographic projection planes 934 are transparent or semitransparent.

Having different orthographic projections 936 provided on each of the inside walls provides the user with multiple orthographic references of the three-dimensional objects 932 in the scene 931 when viewed from any direction. Multiple orthographic references of the three-dimensional objects 932 may be particularly useful where one three-dimensional object 932 in the scene obscures another three-dimensional object 932 in one or more views. For example, the three-dimensional object 932-2 obscures the view of the three-dimensional object 932-1 with respect to the second orthographic projection plane 934B, and thus the only orthographic projection visible on the second orthographic projection plane 934B is orthographic projection 936B-2. However, the three-dimensional object 932-2 and 932-1 are both visible as orthographic projections 936A-2 and 936A-1, respectively, on the first orthographic projection plane 934A. Thus, a user may easily spot visual obstructions in the scene 931, and manipulate the scene 931 unimpeded by such visual obstructions. For example, the user may manipulate the three-dimensional object 932-1 by interacting with the orthographic projection 936A-1 since the orthographic projection of the three-dimensional object 932-1 may not be present on the second orthographic projection plane 934B or may be present but overlapping with the orthographic projection 936B-2.

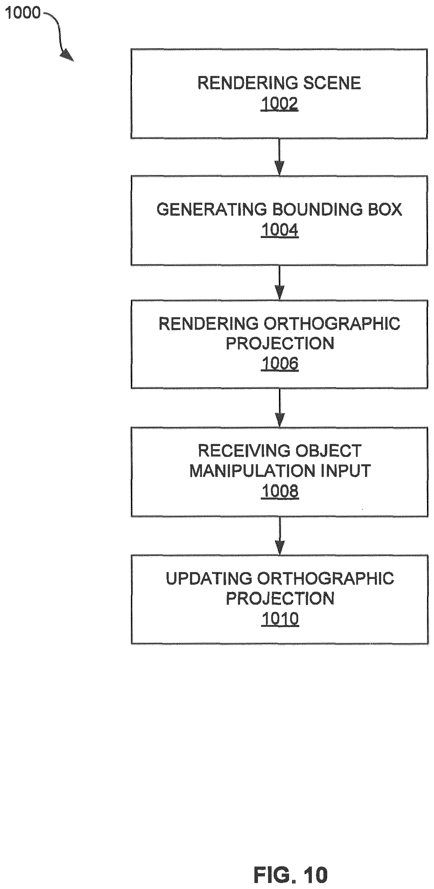

FIG. 10 is a flowchart of an example method 1000 to generate an orthographic projection of an object in a scene viewable through an editing viewport on an inside wall of a bounding box. The method 1000 may be embodied in a non-transitory machine-readable storage medium. The method 1000 may be performed using any computing device as described herein, such as the computing device 200 of FIG. 2 or the computing device 400 of FIG. 4. The method 300 may be performed using other instructions and/or devices.

At block 1002, a scene is rendered to be viewable through an editing viewport. The scene contains a three-dimensional object. At block 1004, a bounding box is generated. The bounding box has inside walls viewable through the editing viewport. Each inside wall is an orthographic projection plane. The bounding box includes a plurality of such orthographic projection planes to bound the three-dimensional object. At block 1006, an orthographic projection of the three-dimensional object is rendered. The orthographic projection is viewable through the editing viewport. The orthographic projection may be rendered onto an orthographic projection plane. At block 1008, an input of a manipulation of the three-dimensional object is received. At block 1010, an update to the orthographic projection is made to reflect the input. Thus, in other words, the orthographic projection is synchronized with the three-dimensional object. The orthographic projection may be synchronized in scale, position, and orientation with the three-dimensional object.

The blocks of the method 1000 are similar to the instructions stored on the storage medium 100 of FIG. 1, including scene rendition instructions 102, orthographic projection rendition instructions 104, object manipulation input receipt instructions 106, and orthographic projection update instructions. Thus, for further description of the blocks of method 1000, reference may be had to the instructions of the storage medium 100 of FIG. 1. For example, manipulation of three-dimensional object may be received as an interaction with the three-dimensional object in the scene, an orthographic projection of the object, or a manipulation widget, as discussed above with reference to FIG. 1.

Thus, a scene editor may be provided which includes a user interface having an editing viewport which displays an orthographic projection of an object in a scene on an orthographic projection plane inserted directly into a perspective or other view of the scene, thereby providing the benefit of having a reference to an orthographic view of the object embedded directly within the perspective or other view. A user may manipulate the orthographic projection in the orthographic space provided by an orthographic projection plane to make precise manipulations of the three-dimensional object. Orthographic projections may be provided on a plurality of orthographic projection planes, such as the inside walls of a bounding box, to have the benefit of orthographic references of three-dimensional objects in the scene from different points of view. Such a scene editor may be more intuitive to use, more efficient in the use of space in the user interface, and more efficient with processing power and memory.

It should be recognized that features and aspects of the various examples provided above can be combined into further examples that also fall within the scope of the present disclosure. The scope of the claims should not be limited by the above examples but should be given the broadest interpretation consistent with the description as a whole.

## Claims

1. A non-transitory machine-readable storage medium comprising instructions that when executed cause a processor of a computing device to:
render a scene viewable through an editing viewport, the scene containing a three-dimensional object;
render an orthographic projection of the three-dimensional object onto an orthographic projection plane, the orthographic projection viewable through the editing viewport;
receive an input of a manipulation of the three-dimensional object; and
update the orthographic projection to reflect the input.

2. The non-transitory machine-readable storage medium of claim 1, wherein the instructions cause the processor to render a manipulatable object on the orthographic projection plane, wherein the input is received by interaction with the manipulatable object.

3. The non-transitory machine-readable storage medium of claim 2, wherein the manipulatable object comprises the orthographic projection.

4. The non-transitory machine-readable storage medium of claim 2, wherein the manipulatable object comprises a manipulator widget.

5. The non-transitory machine-readable storage medium of claim 1, wherein the instructions cause the processor to render the orthographic projection plane viewable through the editing viewport.

6. The non-transitory machine-readable storage medium of claim 5, wherein the instructions cause the processor to render the orthographic projection plane as semitransparent.

7. The non-transitory machine-readable storage medium of claim 1, wherein the instructions cause the processor to render an assistive visual indicator on the orthographic projection plane.

8. The non-transitory machine-readable storage medium of claim 1, wherein the instructions cause the processor to:
render a second orthographic projection of the three-dimensional object onto a second orthographic projection plane, the second orthographic projection plane perpendicular to the orthographic projection plane; and
update the second orthographic projection of the three-dimensional object to reflect the input.

9. The non-transitory machine-readable storage medium of claim 1, wherein the instructions cause the processor to:
render the three-dimensional object in the editing viewport in a first visual style; and
render the orthographic projection of the three-dimensional object rendered on the orthographic projection plane in a second visual style, the second visual style different from the first visual style.

10. The non-transitory machine-readable storage medium of claim 1, wherein the instructions cause the processor to cause the editing viewport to display the scene in a perspective view.

11. The non-transitory machine-readable storage medium of claim 1, wherein the instructions cause the processor to insert the orthographic projection plane into the scene as an object.

12. The non-transitory machine-readable storage medium of claim 1, wherein the orthographic projection plane is aligned with a coordinate axis of the scene.

13. A non-transitory machine-readable storage medium comprising instructions that when executed cause a processor of a computing device to:
render a scene viewable through an editing viewport, the scene containing a three-dimensional object;
generate a bounding box having inside walls viewable through the editing viewport, each inside wall comprising an orthographic projection plane of a plurality of orthographic projection planes bounding the three-dimensional object;
render an orthographic projection of the three-dimensional object onto each orthographic projection plane of the plurality of orthographic projection planes;
receive an input of a manipulation of the three-dimensional object; and
update each of the orthographic projections to reflect the input.

14. The non-transitory machine-readable storage medium of claim 13, wherein the bounding box bounds the scene.

15. A non-transitory machine-readable storage medium comprising instructions that when executed cause a processor of a computing device to:
render a scene viewable through an editing viewport, the scene containing a three-dimensional object;
render an orthographic projection of the three-dimensional object onto an orthographic projection plane, the orthographic projection viewable through the editing viewport; and
synchronize scale, position, and orientation of the orthographic projection with the scale, position, and orientation of the three-dimensional object as viewed through the editing viewport.
